# EUROPEAN PATENT APPLICATION

(11) **EP 3 498 815 A1**
(43) Date of publication of application: **19.06.2019**
(21) Application number: 16912683.6
(22) Date of filing: 10.08.2016
(51) Int. Cl.: C12C 3/00

(54) **METHOD FOR PRODUCING FERMENTED BEVERAGE**

(71) Applicant: Suntory Holdings Limited, Osaka-shi, Osaka 530-8203 (JP)
(72) Inventor: INUI, Takako, Osaka 618-0001 (JP); ISHIZUKA, Yusuke, Osaka 618-0001 (JP); HAYASHI, Chie, Tokyo 183-8533 (JP)
(74) Representative: Vossius & Partner Patentanwälte Rechtsanwälte mbB
(86) International application number: PCT/JP2016/073552
(87) International publication number: WO 2018/029802

(57) **Abstract**

A method for producing a fermented beverage, characterized in that the method includes adding a hop processed product to a raw material liquid from the tightly closed vessel, the hop processed product being prepared by treating a hop-containing water under conditions of a temperature of 100°C or higher and 130°C or lower, and preferably 105°C or higher and 125°C or lower, and a pressure of 0.01 MPa or more and 0.36 MPa or less in a tightly closed vessel; and adding an yeast to allow fermentation. According to the present invention, the bitterness ingredients and the aroma ingredients can be more conveniently extracted from the hops, so that a new taste can be provided as a luxury product.

## Description

### TECHNICAL FIELD

The present invention relates to a method for producing a fermented beverage. More specifically, the present invention relates to a method for producing a fermented beverage using hops.

### BACKGROUND ART

Conventionally, in the production of beer-taste beverages, the step of adding hops to a wort without any processing and boiling has been often carried out. However, in the boiling step, heating greatly influences the quality of beer-taste beverages, so that techniques of effectively using ingredients contained in hops by separately processing the hops have been studied.

For example, Patent Publication 1 discloses, for the purpose of reducing or removing a hop aroma ingredient added to a final manufactured article, a method including separately boiling hops and raw material liquids under different heating conditions, thereby extracting a hop bitterness ingredient, while dissipating the hop aroma ingredient efficiently. Specifically, hops are added to a solvent heated to 90°C under an atmospheric pressure, the mixture is held at a temperature within the range of from about 90° to about 100°C for about 30 to about 180 minutes, and thereby an aroma ingredient is evaporated in a given amount and an α-acid is sufficiently extracted in a solvent, and the extract is subsequently added to a raw material liquid.

In addition, in Patent Publication 2, in order to improve the isomerization of an α-acid contained in the hops, a hop extract is formed into a microemulsion, so that the liquid droplet sizes of the hop extract become smaller, thereby increasing the specific surface area, which is attributive to a bitterness ingredient in a wort. Here, a liquid or a paste-like form has been used as a hop extract, and a method of mixing the hop extract with an aqueous fluid to form into a microemulsion with shearing agitation, thereafter increasing a pressure to a pressure higher than 100 Barr, and then relieving a pressure, thereby forming a microemulsion has been employed. In addition, during the formation of the emulsion, the isomerization of the α-acid also progresses by meeting the temperature conditions for isomerization. Therefore, it is described that the boiling time of the wort can be greatly shortened by using a hop processed product prepared as described above.

### RELATED ART REFERENCES

### PATENT PUBLICATIONS

Patent Publication 1: Japanese Patent Laid-Open No. 2009-77730
Patent Publication 2: Japanese Unexamined Patent Publication No. 2014-511707

### SUMMARY OF THE INVENTION

### PROBLEMS TO BE SOLVED BY THE INVENTION

However, in the method of Patent Publication 1, only the bitterness ingredient is considered, so that it would not sufficiently meet the diversified tastes of the consumers in the recent years. Also, the method of Patent Publication 2 goes through complicated procedures, so that further improvements are desired.

An object of the present invention is to provide a method for producing a fermented beverage having more robust and fruity aroma, while having excellent bitterness.

### MEANS TO SOLVE THE PROBLEMS

The present invention relates to a method for producing a fermented beverage, characterized in that the method includes
adding a hop processed product to a raw material liquid from a tightly closed vessel, the hop processed product being prepared by treating a hop-containing water under conditions of a temperature of 100°C or higher and 130°C or lower and a pressure of 0.01 MPa or more and 0.36 MPa or less in the tightly closed vessel; and
adding an yeast to allow fermentation.

### EFFECTS OF THE INVENTION

According to the method of the present invention, it is made possible to produce a fermented beverage having more robust and fruity aroma, while having excellent bitterness.

### MODES FOR CARRYING OUT THE INVENTION

The method for producing a fermented beverage of the present invention has a great feature of subjecting to a particular high-temperature high-pressure treatment, and thereafter using a cooled hop processed product before pressure relieving.

Conventionally, in the flavor adjustment of fermented beverages, additions of hops in plural occasions including adding hops at an early stage of boiling and sufficiently extracting out the bitterness, and separately adding hops for flavoring have been often carried out. However, the present inventors have found for the first time that by subjecting a hop-containing water to a particular high-temperature, high-pressure treatment, in other words, pressurizing at a temperature higher than a boiling temperature in a tightly closed vessel and boiling, not only the extraction of the bitterness ingredients from the hops is accelerated but also isomerization of the α acid is also accelerated, thereby increasing the amount of iso-α acid. In addition, during the treatment, a precursor of ethyl 2 methyl butyrate (E2MB) or 3 methyl butyrate, 3-hexenoic acid ethyl ester (e.g., 2-methyl butanoic acid, 3-methyl butanoic acid, 3-hexenoic acid), which is a fruity aroma ingredient, would also be produced, and the precursor is esterified by top yeast to produce an ingredient showing a fruity aroma. Therefore, it is assumed that many precursors are produced by the high-temperature, high-pressure treatment, thereby making a fermented beverage obtained by the method of the present invention more robust and fruity in aroma. However, these assumptions by no means limit the present invention. Here, the above high-temperature, high-pressure treatment as used herein may be simply referred to as the treatment of the present invention.

The term "fermented beverage" as used herein refers to a beverage which is fermented, in which grains are used as a part of raw materials, and desirably refers to an alcohol-containing beverage produced using wheat, especially malts as a part of raw materials. Specific examples include beers, *Happoushu* (low-malt beers), low-alcohol malt-fermented beverage (for example, malt-fermented beverage having an alcohol content of less than 1%), and the like, which are fermented malt beverages that are classified into beers, *Happoushu* (low-malt beers), liqueurs, spirits, according to the classifications of liquors in accordance with the Liquor Tax Law in Japan.

The method for preparing a hop processed product will be explained hereinbelow.

The hop-containing water in the present invention refers to a mixture containing hops and water as raw materials. In other words, the hop-containing water in the present invention may refer not only to a simple mixture of hops and water, but also to those with some treatments (for example, agitation treatment) after mixing hops and water.

As the hops usable in the present invention, a hop flower thereof (matured non-pollinated pistillate flower) in its entirety can be directly used or one crushed can be used. In addition, hop processed products such as "dry hop flowers" in which hops are simply dried; hop pellets in which the dry hop flowers are crushed and pelletized; hop bracts, which are processed products in which lupulin is greatly removed from the hop flower; and hop extracts can also be used. These hops can be used alone or in a combination of two or more kinds. Here, the areas of produce and varieties of the hops are not particularly limited, and can be properly selected and used depending upon the flavor of the fermented beverage produced.

In addition, in the present invention, other solvents besides water can be used within the range that would not impair the effects of the present invention. The other solvents may be an aqueous solvent, and a water-containing alcohol or the like can be used. The content of water in the entire solvents including water is preferably 99.5% by mass or more, more preferably 99.8% by mass or more, and even more preferably 99.9% by mass or more, taking the blending into foodstuff into consideration. Here, the entire solvents including water and other solvent as used herein may be simply referred to as a treatment solvent.

The pH of the treatment solvent is, but not particularly limited to, preferably from 4.5 to 9.5, and more preferably from 5.0 to 8.5.

The hops are mixed with the above treatment solvent, and the (solid content) concentration of the hops in the containing water includes, but not particularly limited to, 30 g/L or more or 45 g/L or more, from the viewpoint of the treatment efficiency. Here, in the present invention, since the treatment solvent does not evaporate during the high-temperature, high-pressure treatment, the hop concentration in the hop processed product obtained hardly fluctuates from those defined above. The solid content of the hops as used herein means a dry weight of the hops before the addition.

The hop-containing water is heated in a tightly closed vessel in the present invention. A tightly closed vessel means a vessel that can form a closed space that is completely blocked out from the external during a high-temperature, high-pressure treatment mentioned later, and may have an aperture to the external or a communication path with the external other than the treatment time. In the present invention, the vessel may have a structure that is durable for high-temperature and high-pressure, and, for example, a known treatment tank connected with a wort boiling tank, a precipitation tank or the like via a pipe other than the treatment time, while forming a closed space as mentioned above with a closed valve during the treatment can be used. Here, the treatment tank may be made of a material that does not elute an ingredient such as a metal or does not form a harmful substance, and a material such as stainless steel is preferred in order to prevent unwanted reactions, corrosion, degradation or the like, but not limited thereto.

In the present invention, the high-temperature, high-pressure treatment is carried out by filling a treatment tank as mentioned above with a hop-containing water. It is preferable that the treatment is carried out in a state that the remaining space volume after removing the part occupied by the hop-containing water satisfies at least one of the followings, from the viewpoint of efficiently carrying out the treatment. Specifically, it is preferable that the volume space of the gap portion of the treatment tank is:
(i) in a state of preferably 50% by volume or less, more preferably 30% by volume or less, and even more preferably 10% by volume or less, the lower limit not being particularly set, of the entire volume of the treatment tank, the treatment tank being filled with a hop-containing water and/or
(ii) in a state of subjecting to nitrogen replacement or oxygen replacement.

The treatment temperature in the high-temperature, high-pressure treatment may be a temperature of 100°C or higher and 130°C or lower, and the treatment temperature is preferably 105°C or higher, and more preferably 110°C or higher, from the viewpoint of accelerating the isomerization. In addition, the treatment temperature is preferably 125°C or lower, and more preferably 120°C or lower, from the viewpoint of suppressing the degradation of the aroma ingredients. Here, the treatment temperature as used herein means a set temperature of the apparatus of heating a treatment tank, and it is preferable that the temperature of the contents is set within the temperature range defined above. The temperature of the contents can be measured with, for example, a thermometer attached to an apparatus.

The treatment pressure in the high-temperature, high-pressure treatment may be a pressure of 0.01 MPa or more and 0.36 MPa or less. The term "pressure" as used herein means "a gauge pressure." Therefore, for example, when "a pressure of 0.01 MPa" is converted to an absolute pressure, it means a pressure of applying 0.01 MPa to the atmospheric pressure. Among them, the pressure is preferably 0.05 MPa or more, and more preferably 0.10 MPa or more, from the viewpoint of accelerating the isomerization. In addition, the upper limit is not unconditionally set because the pressure depends on the tolerable pressure of the treatment tank, and the pressure is preferably 0.30 MPa or less, and more preferably 0.27 MPa or less, from the viewpoint of accelerating the production of precursors of the fruity aroma ingredients.

Accordingly, suitable combinations of the treatment temperature and the treatment pressure include, for example, conditions of 100°C and 0.01 MPa, conditions of 105°C and 0.12 MPa, conditions of 110°C and 0.14 MPa, conditions of 115°C and 0.17 MPa, conditions of 120°C and 0.20 MPa, conditions of 125°C and 0.24 MPa, conditions of 130°C and 0.27 MPa, and the like.

The treatment time is not unconditionally set because the treatment time depends upon the sizes of a treatment tank, a treatment temperature or pressure, when, for example, a pressing treatment is carried out at 110° to 120°C with an about 60 L tank, the treatment time is preferably from 15 to 60 minutes, and more preferably from 15 to 30 minutes, after reaching the treatment temperature. Here, the treatment time as used herein is the time period that is continued heating, and the pressure during this time does not have to continuously show the pressure given above, and it may partly show the pressure given above.

In addition, in the present invention, subsequent to the high-temperature, high-pressure treatment, it is preferable to wait for allowing the temperature of the contents to be lowered without relieving a pressure of the tightly closed vessel, from the viewpoint of suppressing the dissipation of the aroma ingredients to the external of the vessel. This is because the processed product obtained by suppressing dissipation to the external of the aroma ingredients would be able to absorb even more amounts of the aroma ingredients by allowing the temperature of the contents to be lowered. The temperature of the contents is preferably 90°C or lower, more preferably 70°C or less, even more preferably 50°C or less, and even more preferably 40°C or lower, from the viewpoint of accelerating absorption of the aroma ingredients. In addition, the lower limit is not particularly limited, and is 10°C or so, from the viewpoint of operability. A method of lowering the temperature is not particularly limited, and the temperature may be positively cooled, or allowed to be air-cooled.

In addition, the processed product obtained may be subjected to a known treatment, for example, filtration, concentration, fractionation, drying, or the like; however, in the present invention, it is preferable that the processed product in its entirety including the residues is directly used, from the viewpoint of giving larger amounts of flavor ingredients. Specifically, for example, a processed product in its entirety may be directly added to a wort boiling tank to further boil together with the wort, or a processed product may be added to a precipitation tank to precipitate malt draff and residues, which may be directly added to a fermentation tank.

Thus, a hop processed product is obtained. In the hop processed product obtained, the extraction of α acid is sufficiently carried out, the production of precursors of iso-α acids progresses, and the amount of isomerization progressed would be also large. The contents of each ingredient of the hop processed product are not unconditionally set, and, for example, when compared to a processed product obtained in the same manner except that a treatment is carried out in an open system at 100°C using a treatment tank with an aperture part, the amount of iso-a acids of the hop processed product obtained by the present invention is preferably 1.1 times the mass or more, and more preferably 1.2 times the mass or more, and the upper limit is not particularly set. Also, as the amount of the fruity aroma precursor, for example, the amount of precursors of E2MB is preferably 1.2 times the mass or more, and more preferably 1.5 times the mass or more, and the upper limit is not particularly set.

The method for producing a fermented beverage of the present invention can be carried out in accordance with an ordinary method known to one of ordinary skill in the art except for carrying out the step of adding the above hop processed product to a raw material liquid. Here, the raw material liquid means water, a wort, a liquid sugar, and the like. For example, raw materials including at least one member selected from the group consisting of wheat such as malts, other grains, starches, and sugars, and optionally a bittering agent, a colorant, or the like are supplied to a mash kettle or mash tun, and optionally an enzyme such as amylase is added thereto to carry out gelatinization or saccharification, and then filtered to remove husks or the like, to give a wort. Next, to a wort obtained, the hop processed product of the present invention, optionally together with known hops (or a hop processed product), is added to boil, and solid contents such as coagulated proteins are removed in a clearing tank, to give a clear wort. Alternatively, the wort obtained is added together with the hop processed product of the present invention when supplying the wort to a clearing tank to remove solid contents such as coagulated proteins, to give a clear wort. As to the conditions for these saccharification step, the boiling and clearing step, and the solid content removal step, and the like, conditions that are generally known may be used.

Next, the fermented beverage can be produced by adding an yeast to a clear wort obtained above to allow fermentation, and optionally removing the yeast with a filtration apparatus or the like (also referred to as a fermentation step). The yeast usable in the present invention is a beer yeast, which may be a top-fermenting yeast or a bottom-fermenting yeast, and even more amounts of iso α acid precursors are produced in the present invention, so that it is preferable to use a top-fermenting yeast. Also, as the fermentation conditions, known conditions may be employed. Here, the hop processed product of the present invention may be further added after the beginning of the fermentation. Further, the process can go through the steps of storage (stored liquor), with optional addition of a carbon dioxide gas, filtration and bottling, and optionally sterilization, whereby a fermented beverage of the present invention can be obtained.

Thus, according to the method of the present invention, a fermented beverage that is sufficiently given with bitterness and aroma derived from the hops can be obtained. In the present invention, by using the hop processed product, some excellent effects are exhibited that the flavor adjustments can be performed at once.

In addition, the present invention provides a hop processed product, obtainable by carrying out a high-temperature, high-pressure treatment mentioned above.

The term "hop processed product" as used herein refers to a processed product obtained by the treatment of the present invention, which further embraces a secondary processed product thereof. One example includes a hop extract in which residues in the processed product are removed, and ethanol is then used as a solvent, a hop extract using a carbon dioxide gas as a solvent (including a hop extract obtained using dried carbon dioxide in a subcritical state or a supercritical state as a solvent (Japanese Patent Nos. 3,155,003 and 3,513,877)), hop processed products such as isomerized hops, reduced hops, low hop, Hexa Hop, and Tetra Hop.

The present invention also provides a method for producing a hop processed product of the present invention. Specifically, the method may include treating a hop-containing water in a tightly closed vessel under conditions of a temperature of 100°C or higher and 130°C or lower and a pressure of 0.01 MPa or more and 0.36 MPa or less. Here, the raw materials used above, the reaction apparatus and reaction conditions are as mentioned above.

### EXAMPLES

The present invention will be specifically described hereinbelow by illustrating Examples, without intending to limit the scope of the present invention to the following Examples.

### Test Example 1- Hop Processed Products

Hop pellets (variety: Saaz, area of produce: Czech Republic) were mixed with water so as to have a concentration as listed in Table 1, and the mixture obtained was subjected to a treatment under conditions as listed in Table 1 using a treatment tank as listed in Table 1. The processed product obtained was allowed to air-cool to a temperature as listed in Table 1, and the contents thereof were measured in accordance with the following measurement methods. The results are shown in Table 1. Here, in the treatment tank, as the open or tightly closed treatment tank, a tightly closed treatment tank was defined as a 60 L treatment tank that could be completely plugged during the treatment, and an open treatment tank was defined as the tank in which the plug was opened. In both the tanks, the hop-containing water volumes before the treatment in the treatment tank were filled to a volume of from 50 to 90% by volume of the entire volume of the treatment tank (50 to 10% by volume of the spatial volume of the gap portion). In addition, the concentration of the hop-containing water after the treatment is a value calculated from the amount of water loss after the treatment.

### < Amount of Iso-α Acid>

The amount was quantified in accordance with a method as described in Method 7.7 of "Analytica-EBC" of the analytical method published by the EBC (European Brewery Convention), and a conversion content was calculated by defining the content of Comparative Example 1 as 1.

### < Amount of E2MB Precursor >

The amount was quantified in accordance with a steam distillation method as described in "ASBC Methods of Analysis" of the analytical method published by the ASBC (The American Society of Brewing Chemists), and a conversion content was calculated by defining the content of Comparative Example 1 as 1.

### [Table 1]

**Table 1**

| | | Comp. Ex. | Ex. | | | | | |
|---|---|---|---|---|---|---|---|---|
| | | 1 | 1 | 2 | 3 | 4 | 5 | 6 |
| Hop-Containing Water | Concentration Before Treatment, g/L | 30 | 30 | 30 | 30 | 30 | 30 | 30 |
| | Concentration After Treatment, g/L | 42 | 30 | 30 | 30 | 30 | 30 | 30 |
| Treatment Tank | Open or Tightly Closed System | Open | Tightly Closed | Tightly Closed | Tightly Closed | Tightly Closed | Tightly Closed | Tightly Closed |
| Treatment Conditions | Temperature, °C | 100 | 100 | 105 | 110 | 110 | 120 | 130 |
| | Pressure, MPa | 0 | 0.01 | 0.12 | 0.14 | 0.14 | 0.20 | 0.27 |
| | Time, minutes | 40 | 40 | 30 | 20 | 20 | 15 | 5 |
| After Treatment | Temperature, °C | 90 | 90 | 90 | 90 | 25 | 25 | 25 |
| Processed Product | Amount of Iso-α Acid (Based on Comp. Ex. 1, times) | 1.00 | 1.00 | 1.31 | 1.18 | 1.21 | 1.26 | 1.17 |
| | Amount of E2MB Precursor (Based on Comp. Ex. 1, times) | 1.00 | 1.00 | 1.00 | 1.50 | 1.60 | 1.75 | 2.50 |

It can be seen from Table 1 that the processed product obtained by the treatment of the present invention richly contains iso-a acid and the E2MB precursor, so that bitterness ingredients and aroma ingredients can be excellently extracted from the hops.

### Test Example 2 - Sensory Evaluations of Beers

### < Production of Beer >

One-hundred liters of a filtered wort obtained by an ordinary method was heated to 98°C with a boiling kettle, and a hop processed product as listed in Table 2 was then added thereto. After stirring for one minute, the wort was subjected to whirlpool rest, and rapidly cooled, to prepare a cold wort. An yeast was added to allow fermentation, a mixture was filtered, and a carbon dioxide gas pressure was then adjusted, to produce a beer.

### < Sensory Evaluations >

Flavor of the beers obtained was evaluated by a sensory test according to a scoring method. Five well-trained sensory evaluators were asked to evaluate for the "effect on disappearance of bitterness," "fruity aroma" and "overall evaluation" in a full mark of score 5. "Very strongly felt or very excellent" was given score 5; "felt or excellent" was given score 4; "somewhat felt or fair" was given score 3; "slightly felt or slightly fair" was given score 2; and "not felt or normal" was given score 1, and an average of evaluated scores was calculated, and the evaluations were made in accordance with the following criteria based on an average score. The higher evaluated scores of "effect on disappearance of bitterness," "fruity aroma" and "overall evaluation," the more preferred, and a score of 2.0 or more is preferred. The results are shown in Table 2.

### [Table 2]

**Table 2**

| Hop Processed Product | | Comp. Ex. 1 | Ex. 4 |
|---|---|---|---|
| Sensory Evaluations | Effect on Disappearance of | 1.8 | 3.0 |
| | Fruity Aroma | 1.5 | 3.5 |
| | Overall Evaluation | 1.8 | 4.0 |

As is clear from Table 2, Example 4 had an excellent balance in "effect on disappearance of bitterness" and "fruity aroma," and its overall evaluation was excellent. On the other hand, Comparative Example 1 was poorer in the aspect of "fruity aroma," resulting in unfavorable evaluation.

### INDUSTRIAL APPLICABILITY

According to the present invention, the bitterness ingredients and the aroma ingredients can be more conveniently extracted from the hops, so that a new taste can be provided as a luxury product.

## Claims

1. A method for producing a fermented beverage, **characterized in that** the method comprises
adding a hop processed product to a raw material liquid from the tightly closed vessel, the hop processed product being prepared by treating a hop-containing water under conditions of a temperature of 100°C or higher and 130°C or lower and a pressure of 0.01 MPa or more and 0.36 MPa or less in a tightly closed vessel; and
adding an yeast to allow fermentation.

2. The method according to claim 1, wherein the treatment temperature inside the tightly closed vessel is 110°C or higher and 130°C or lower.

3. The method according to claim 1 or 2, wherein the temperature of the hop processed product during addition to the raw material liquid is 10°C or higher and 90°C or lower.

4. The method according to any one of claims 1 to 3, wherein the treatment within the tightly closed vessel is carried out in a state that satisfies at least one of the followings that the remaining space volume after removing the part occupied by the hop-containing water is:
(i) 50% by volume or less of the entire volume of the vessel, the vessel being filled with a hop-containing water; and
(ii) subjected to nitrogen replacement or oxygen replacement.

5. The method according to any one of claims 1 to 4, wherein the hop concentration of the hop processed product is 30 g/L or more.
